# EUROPEAN PATENT APPLICATION

(11) **EP 3 620 093 A1**
(43) Date of publication of application: **11.03.2020**
(21) Application number: 19196102.8
(22) Date of filing: 09.09.2019
(51) Int. Cl.: A47L 9/06

(54) **CLEANER FOR CLEANING ROBOT**

(30) Priority: 10.09.2018 JP 2018168930
(71) Applicant: Kabushiki Kaisha Toyota Jidoshokki, Kariya-shi, Aichi 448-8671 (JP)
(72) Inventor: NAKASHIMA, Takashi, Kariya-shi, Aichi 448-8671 (JP); NOMURA, Toshihiko, Chuo-ku, Tokyo 104-0061 (JP)
(74) Representative: TBK

(57) **Abstract**

A cleaner for a cleaning robot cleaning a floor surface while traveling includes a support member, a brush unit attached to the support member and having a brush grounded to the floor surface, and a flip-up mechanism flipping up the brush such that the brush is directed in a direction perpendicular to an upward-downward direction of the cleaning robot.

## Description

### TECHNICAL FIELD

The present disclosure relates to a cleaner for a cleaning robot.

### BACKGROUND

A technique described in, for example, Japanese Unexamined Patent Publication No. 2017-12907 is known as a cleaner for a cleaning robot according to the related art. The cleaning robot described in Japanese Unexamined Patent Publication No. 2017-12907 is provided with a main body housing provided with a suction port on the lower surface of the front portion of the main body housing, a pair of drive wheels provided on the main body housing, a front wheel provided in the front end portion of the main body housing, a rear wheel provided in the rear end portion of the main body housing, a rotating brush disposed in the suction port, and a pair of side brushes disposed to the side of the suction port. When the cleaning robot moves forward, dust on a floor surface is swept up by the rotating brush and dust to the side of the suction port is guided to the suction port by the side brush.

### SUMMARY

When the trash attached to the rotating brush tangles, for example, the trash remains attached to the rotating brush. In this regard, it is necessary to perform maintenance of the rotating brush on a regular basis. In the related art described above, however, the rotating brush is disposed in the suction port of the main body housing, and thus it is difficult for a worker to access the rotating brush. For this reason, it is necessary to remove the rotating brush from the main body housing and the maintenance of the rotating brush takes time and effort.

An object of the present disclosure is to provide a cleaner for a cleaning robot capable of easily performing the maintenance of a brush without removing the brush.

An aspect of the present disclosure relates to a cleaner for a cleaning robot cleaning a floor surface while traveling. The cleaner includes a support member, a brush unit attached to the support member and having a brush grounded to the floor surface, and a flip-up mechanism flipping up the brush such that the brush is directed in a direction perpendicular to an upward-downward direction of the cleaning robot.

In the cleaner for a cleaning robot described above, a worker can easily access the brush in performing maintenance of the brush by flipping up the brush by means of the flip-up mechanism such that the brush is directed in the direction perpendicular to the upward-downward direction of the cleaning robot. As a result, it is possible to easily perform the maintenance of the brush without removing the brush.

The brush unit may have a brush holder holding the brush and pivotably supported by a pin attached to the support member so as to extend in a rightward-leftward direction of the cleaning robot. The flip-up mechanism may have a cam fixed to the brush holder and pivotable with respect to the pin and a bar for locking the cam, the bar being attached to the support member so as to extend in the rightward-leftward direction. The cam may be provided with a first notch portion engaging with the bar in a state where the brush is not flipped up and a second notch portion engaging with the bar in a state where the brush is flipped up. In this configuration, the brush can be flipped up so as to be directed in the direction perpendicular to the upward-downward direction of the cleaning robot by means of the simple structure of the cam and the bar. In addition, the brush is locked in a flipped-up state by the bar engaging with the second notch portion of the cam. Accordingly, it is possible to maintain a state where the brush is flipped up so as to be directed in the direction perpendicular to the upward-downward direction of the cleaning robot.

The first notch portion may be provided in a top portion of the cam and the second notch portion may be provided in a side portion of the cam. In this configuration, it is possible to engage the bar with the second notch portion by lowering the bar in a state where the cam is pivoted with respect to the pin such that the second notch portion of the cam is directed upward after lifting the bar and removing the bar from the first notch portion of the cam. Accordingly, it is possible to maintain a state where the brush is flipped up so as to be directed in the direction perpendicular to the upward-downward direction of the cleaning robot while simplifying the shape of the cam.

A right parallel link mechanism and a left parallel link mechanism may be fixed to the support member so as to be swingable in the upward-downward direction. The parallel link mechanism may have a lower link and an upper link supported by the support member and a connection link interconnecting the lower link and the upper link and extending in the upward-downward direction. The pin may interconnect connection portions between the lower links and the connection links of the two parallel link mechanisms. The connection link may be provided with a long hole extending in the upward-downward direction. The bar may be supported by the connection link so as to be movable in the upward-downward direction in a state where the bar is engaged with the long hole. In this configuration, the brush unit is attached to the support member via the two parallel link mechanisms and the pin. Accordingly, even when the floor surface has a step or the like during the traveling of the cleaning robot, the brush moves in the upward-downward direction by following the step or the like of the floor surface. As a result, the brush can be grounded even to the floor surface having the step or the like. In addition, the bar is supported by the connection link so as to be movable in the upward-downward direction in a state of being engaged with the long hole of the connection link. Accordingly, despite the structure in which the bar is supported by the connection link, it is possible to easily make a change from a state where the bar is engaged with the first notch portion of the cam to a state where the bar is engaged with the second notch portion of the cam.

The first notch portion may extend in a forward-rearward direction of the cleaning robot. In this configuration, the bar is movable in the forward-rearward direction relative to the cam in a state where the brush is not flipped up. Accordingly, the brush is swingable in the forward-rearward direction about the pin.

According to the present disclosure, it is possible to easily perform the maintenance of the brush without removing the brush.

### BRIEF DESCRIPTION OF THE DRAWINGS

FIG. 1 is a side view illustrating a cleaning robot provided with a cleaner according to an embodiment of the present disclosure.
FIG. 2 is a perspective view illustrating the appearance of the cleaner.
FIG. 3 is a side view of the cleaner.
FIG. 4 is a front view of the cleaner.
FIG. 5 is a bottom view of a brush unit.
FIG. 6 is a side view illustrating how the cleaner swings in a forward-rearward direction.
FIG. 7 is a front view illustrating how the cleaner swings in a rightward-leftward direction.
FIG. 8 is a configuration diagram of a control system of the cleaning robot.
FIG. 9 is a side view illustrating a state where a rotating brush is raised from a floor surface by a lifting and lowering unit.
FIG. 10 is a front view illustrating a state where the rotating brush is raised from the floor surface by the lifting and lowering unit.
FIG. 11 is a side view illustrating a state where the rotating brush is grounded to the floor surface by a parallel link mechanism being lowered in a case where a wheel of a traveling carriage is on a step portion of the floor surface.
FIG. 12 is a side view illustrating a state where the rotating brush is flipped up by a flip-up mechanism so as to be directed forward.
FIG. 13 is a front view illustrating a state where the rotating brush is flipped up by the flip-up mechanism so as to be directed forward.

### DETAILED DESCRIPTION

Hereinafter, an embodiment of the present disclosure will be described in detail with reference to accompanying drawings.

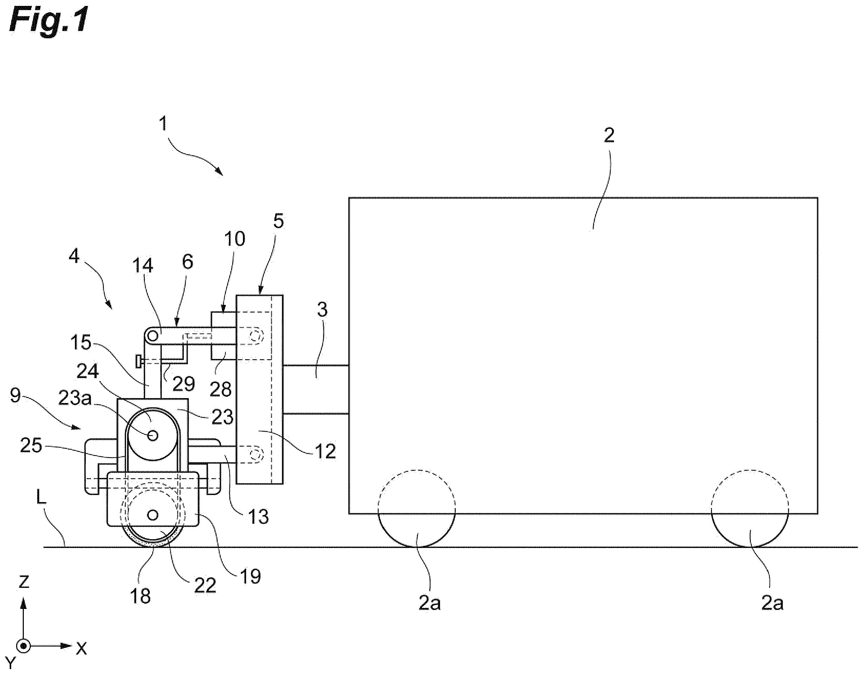

FIG. 1 is a side view illustrating a cleaning robot provided with a cleaner according to an embodiment of the present disclosure. In FIG. 1, a cleaning robot 1 is a self-propelled robot cleaning a floor surface L while traveling. The cleaning robot 1 is provided with a traveling carriage 2 and a cleaner 4 attached to the front end of the traveling carriage 2 via a connecting member 3. The traveling carriage 2 has four omnidirectional wheels 2a and is capable of moving in all directions, that is, in the forward, rearward, rightward, and leftward directions.

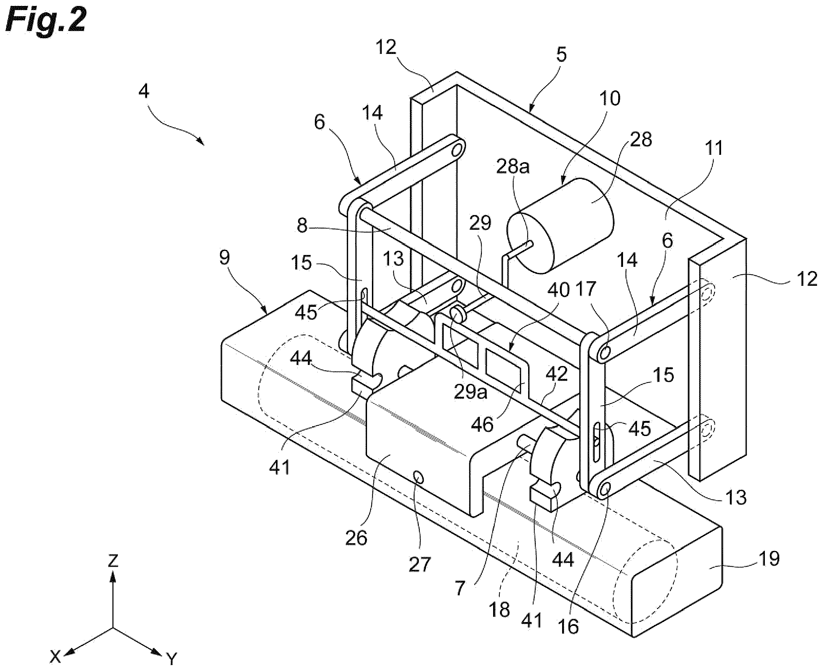

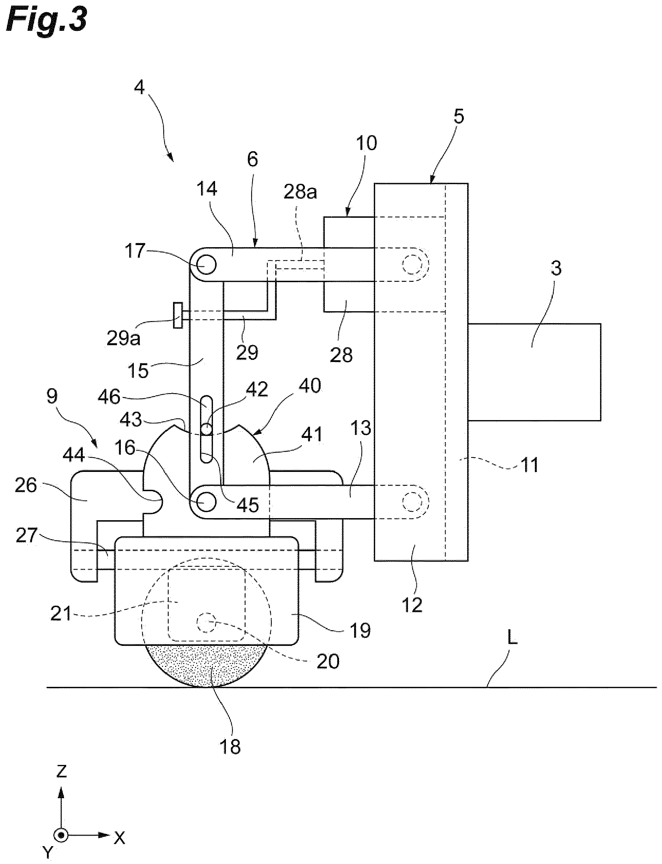

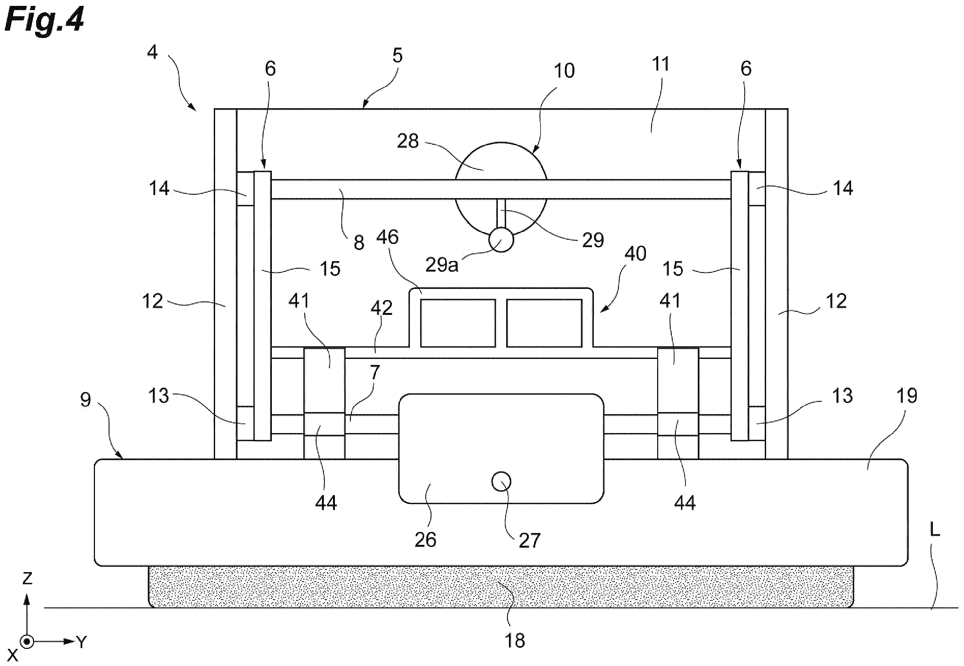

FIG. 2 is a perspective view illustrating the appearance of the cleaner 4. FIG. 3 is a side view of the cleaner 4. FIG. 4 is a front view of the cleaner 4. Incidentally, in FIGS. 2 to 4, the configuration of a part of a brush unit 9 (described later) in FIG. 1 is omitted for convenience.

In FIGS. 1 to 4, the cleaner 4 of the present embodiment is mounted in the front portion of the cleaning robot 1 and cleans the floor surface L. The cleaner 4 is provided with a support member 5, two parallel link mechanisms 6 on the right and left, a lower connecting pin 7, an upper connecting pin 8, the brush unit 9, a lifting and lowering unit 10, and a flip-up mechanism 40.

The support member 5 has a base plate 11 fixed to the connecting member 3 of the traveling carriage 2 and two protruding portions 12 protruding forward from both of the right and left end portions of the base plate 11. The protruding portion 12 extends in the upward-downward direction (Z direction) of the cleaning robot 1.

The parallel link mechanism 6 is fixed to both of the right and left sides of the support member 5 so as to be swingable in the upward-downward direction. The parallel link mechanism 6 has a lower link 13 pivotably supported in the lower portion of the inside surface of the protruding portion 12, an upper link 14 pivotably supported in the upper portion of the inside surface of the protruding portion 12, and a connection link 15 interconnecting the lower link 13 and the upper link 14. The lower link 13 and the upper link 14 extend in the forward-rearward direction (X direction) of the cleaning robot 1. The connection link 15 extends in the upward-downward direction of the cleaning robot 1.

The lower link 13 and the connection link 15 are pivotably connected to each other. The connection portion between the lower link 13 and the connection link 15 constitutes a lower joint portion 16. The upper link 14 and the connection link 15 are pivotably connected to each other. The connection portion between the upper link 14 and the connection link 15 constitutes an upper joint portion 17.

The lower connecting pin 7 interconnects the lower joint portions 16 of the two parallel link mechanisms 6. The upper connecting pin 8 is disposed above the lower connecting pin 7 and interconnects the upper joint portions 17 of the two parallel link mechanisms 6. The lower connecting pin 7 and the upper connecting pin 8 extend in the rightward-leftward direction (Y direction) of the cleaning robot 1.

The brush unit 9 is attached to the support member 5 via the two parallel link mechanisms 6 and the lower connecting pin 7. The brush unit 9 has a cylindrical rotating brush 18 grounded to the floor surface L and sweeping up trash on the floor surface L and a box-shaped brush holder 19 rotatably holding the rotating brush 18. The rotating brush 18 and the brush holder 19 extend in the rightward-leftward direction of the cleaning robot 1.

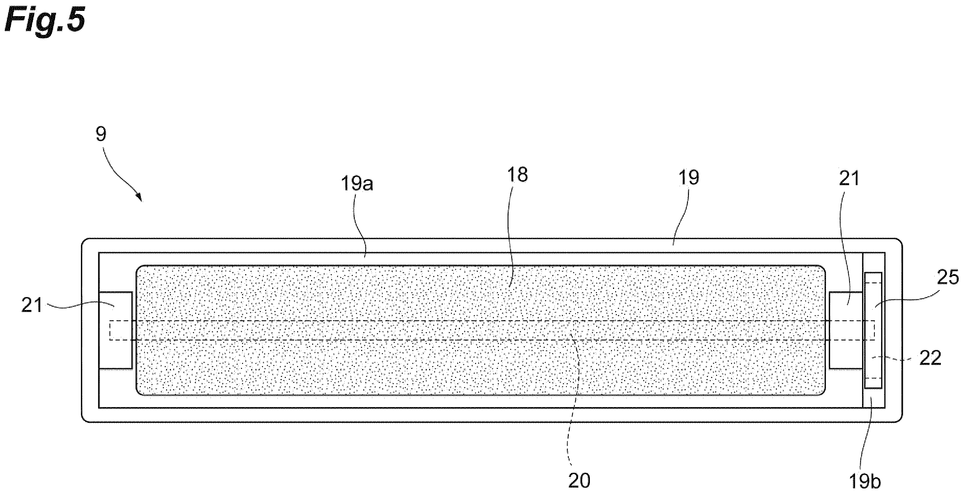

As illustrated in FIG. 5, the brush holder 19 is provided with a brush accommodating portion 19a in which the rotating brush 18 is accommodated. In addition, an opening portion 19b is provided on one of the right and left end sides of the brush holder 19 so that a belt 25 (described later) is disposed. Incidentally, FIG. 5 is a bottom view of the brush unit 9. Support brackets 21 rotatably supporting a rotary shaft 20 are respectively attached to both of the right and left end sides of the brush holder 19. The rotating brush 18 is fixed to the rotary shaft 20 and rotates integrally with the rotary shaft 20. A pulley 22 is fixed to the end portion of the rotary shaft 20 that is on the opening portion 19b side.

As illustrated in FIG. 1, a brush motor 23 is attached to one of the right and left sides of the upper surface of the brush holder 19. A pulley 24 is fixed to an output shaft 23a of the brush motor 23. The belt 25 is stretched around the pulleys 22 and 24. When the brush motor 23 is driven to rotate, the rotation of the brush motor 23 is transmitted to the rotating brush 18 via the pulley 24, the belt 25, the pulley 22, and the rotary shaft 20 and the rotating brush 18 rotates.

In addition, the brush unit 9 has a block 26 U-shaped in side view and pivotably supported by the lower connecting pin 7. The lower connecting pin 7 penetrates the block 26. A support pin 27 extending in the forward-rearward direction is fixed to the block 26. The brush holder 19 is pivotably supported by the support pin 27. Accordingly, the brush holder 19 is pivotably supported by the lower connecting pin 7 via the block 26 and the support pin 27.

The lifting and lowering unit 10 lifts and lowers the brush unit 9 by swinging the parallel link mechanism 6 in the upward-downward direction. Specifically, the lifting and lowering unit 10 swings the parallel link mechanism 6 in the upward-downward direction and lifts and lowers the brush unit 9 by lifting and lowering the upper connecting pin 8. The lifting and lowering unit 10 has a lifting and lowering motor 28 attached to the base plate 11 of the support member 5 and an L-shaped lifting and lowering cam 29 fixed to an output shaft 28a of the lifting and lowering motor 28 and pushing up the upper connecting pin 8.

The lifting and lowering cam 29 is spaced downward from the upper connecting pin 8 in a state where the rotating brush 18 is grounded to the floor surface L. A stopper 29a is provided at the tip of the lifting and lowering cam 29 so that the upper connecting pin 8 does not escape from the lifting and lowering cam 29 when the lifting and lowering cam 29 pushes up the upper connecting pin 8.

The flip-up mechanism 40 flips up the rotating brush 18 such that the rotating brush 18 is directed straight forward. The forward here corresponds to a direction perpendicular to the upward-downward direction of the cleaning robot 1. The flip-up mechanism 40 has two flip-up cams 41 fixed to the upper surface of the brush holder 19 and pivotable with respect to the lower connecting pin 7 and a lock bar 42 for locking the flip-up cam 41. The lock bar 42 is attached to the support member 5 via the two parallel link mechanisms 6 so as to extend in the rightward-leftward direction. The flip-up cams 41 are disposed on both of the right and left sides of the block 26. The lower connecting pin 7 penetrates each flip-up cam 41.

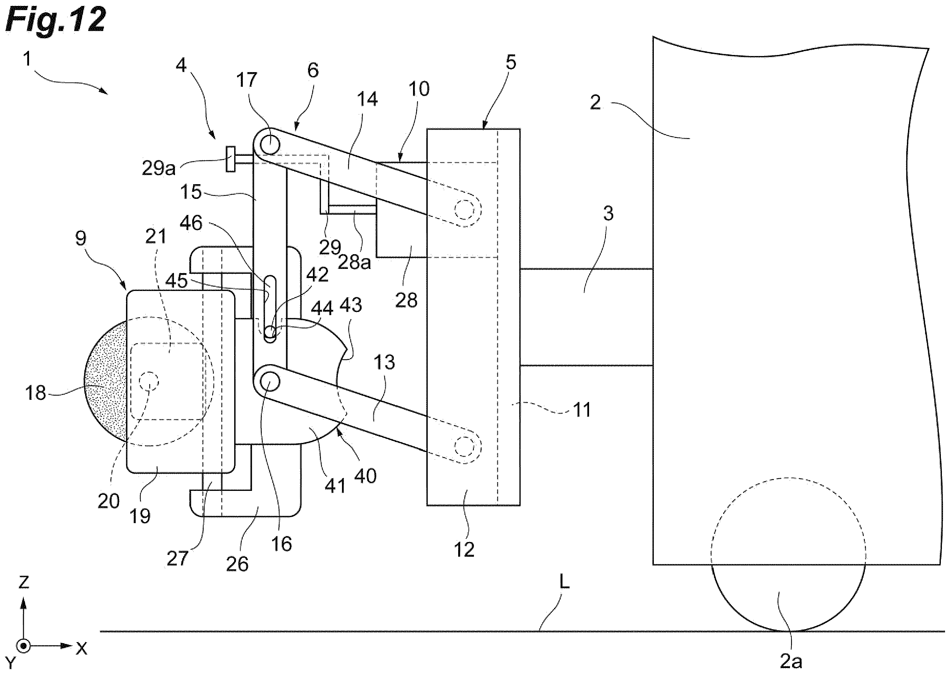

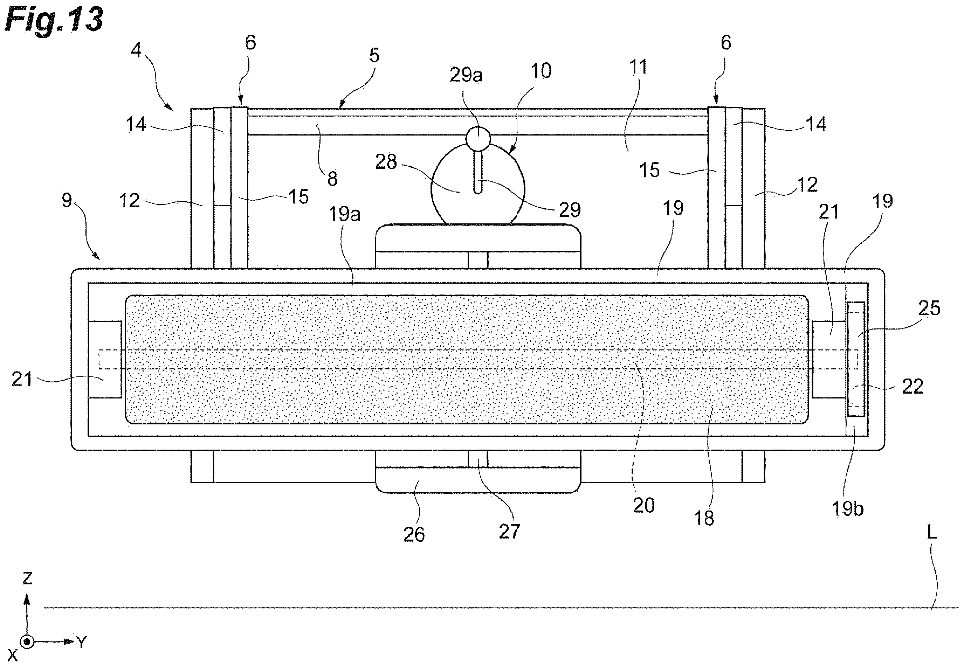

A notch portion 43 (first notch portion) is provided in the top portion of the flip-up cam 41. The notch portion 43 engages with the lock bar 42 in a state where the rotating brush 18 is not flipped up. Accordingly, in a state where the rotating brush 18 is grounded to the floor surface L, the lock bar 42 engages with the notch portion 43. A notch portion 44 (second notch portion) is provided in the front side portion of the flip-up cam 41. The notch portion 44 engages with the lock bar 42 in a state where the rotating brush 18 is flipped up (see FIGS. 12 and 13). The flip-up cam 41 is normally in a state where the lock bar 42 engages with the notch portion 43. Incidentally, the top portion and the front side portion of the flip-up cam 41 are parts at a time when the flip-up cam 41 is in a normal state.

The notch portion 43 has an arc shape in cross section so as to extend in the forward-rearward direction when the flip-up cam 41 is in a normal state. The notch portion 44 is U-shaped in cross section. Accordingly, the dimension of the notch portion 43 in the forward-rearward direction is larger than the dimension of the notch portion 44 in the upward-downward direction. Incidentally, the dimension of the notch portion 43 in the forward-rearward direction and the dimension of the notch portion 44 in the upward-downward direction are dimensions at a time when the flip-up cam 41 is in a normal state. A line interconnecting the central axis of the lower connecting pin 7 and the center of the notch portion 44 is orthogonal to a line interconnecting the central axis of the lower connecting pin 7 and the center of the notch portion 43.

The lock bar 42 is supported by the connection links 15 of the two parallel link mechanisms 6. The connection link 15 is provided with a long hole 45 extending in the upward-downward direction (direction in which the connection link 15 extends). The lock bar 42 is supported by the connection link 15 so as to be movable in the upward-downward direction in a state where the lock bar 42 is engaged with the long hole 45. Incidentally, retainers (not illustrated) are provided in both end portions of the lock bar 42 so that the lock bar 42 is prevented from escaping from the connection link 15.

The lock bar 42 is provided with a handle 46 so that a worker lifts the lock bar 42 by hand. The handle 46 is erected on the upper side in the middle portion of the lock bar 42 in the rightward-leftward direction.

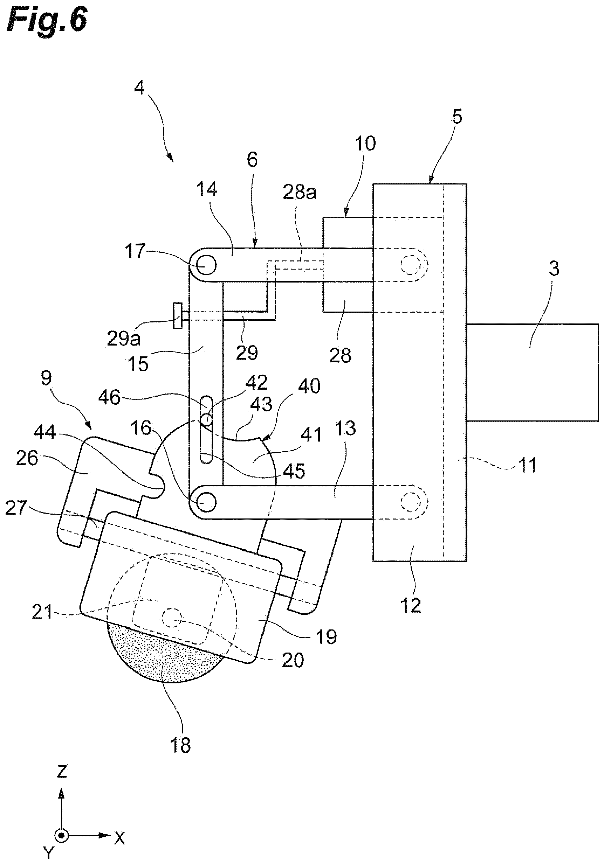

The brush holder 19 is pivotably supported by the lower connecting pin 7 via the block 26 as described above. In addition, the notch portion 43 of the flip-up cam 41 extends in the forward-rearward direction, and thus the lock bar 42 is movable in the forward-rearward direction relative to the flip-up cam 41 in a state where the lock bar 42 is engaged with the notch portion 43. As a result, the brush holder 19 is swingable in the forward-rearward direction about the lower connecting pin 7 (not illustrated in FIG. 6) as illustrated in FIG. 6.

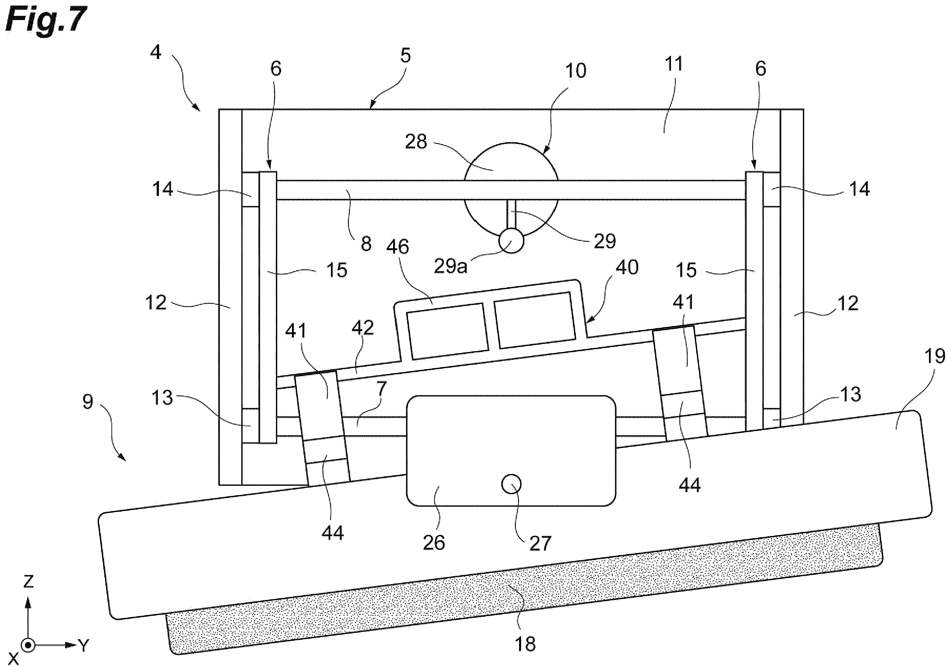

The brush holder 19 is pivotably supported by the support pin 27 as described above. In addition, the lock bar 42 is movable in the upward-downward direction along the long hole 45 of the connection link 15. As a result, the brush holder 19 is swingable in the rightward-leftward direction about the support pin 27 as illustrated in FIG. 7.

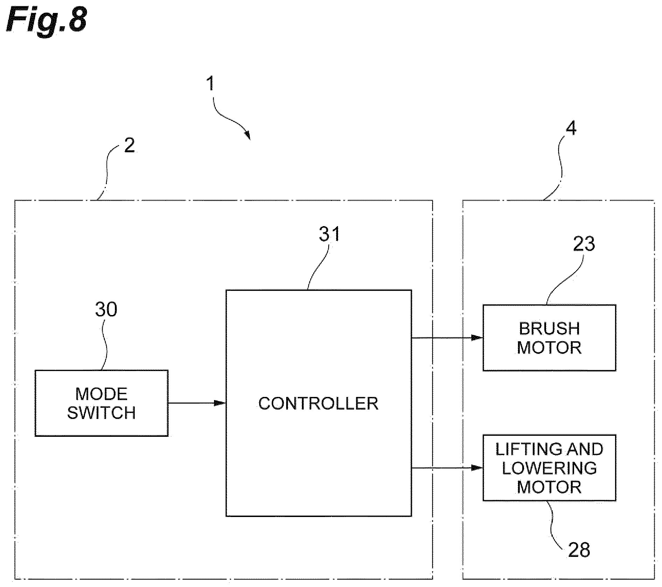

As illustrated in FIG. 8, the traveling carriage 2 is equipped with a mode switch 30 and a controller 31. The mode switch 30 is a switch allowing switching between a cleaning mode and a movement mode. The cleaning mode is a mode in which the cleaning robot 1 cleans the floor surface L while traveling. The movement mode is a mode in which the cleaning robot 1 moves without cleaning the floor surface L.

The controller 31 controls the brush motor 23 and the lifting and lowering motor 28 in accordance with the mode selected by the mode switch 30.

When the cleaning mode is selected by the mode switch 30, the controller 31 controls the lifting and lowering motor 28 such that the rotating brush 18 remains grounded to the floor surface L (see FIGS. 1, 3, and 4) and controls the brush motor 23 such that the rotating brush 18 rotates. As a result, the floor surface L can be cleaned by the cleaner 4.

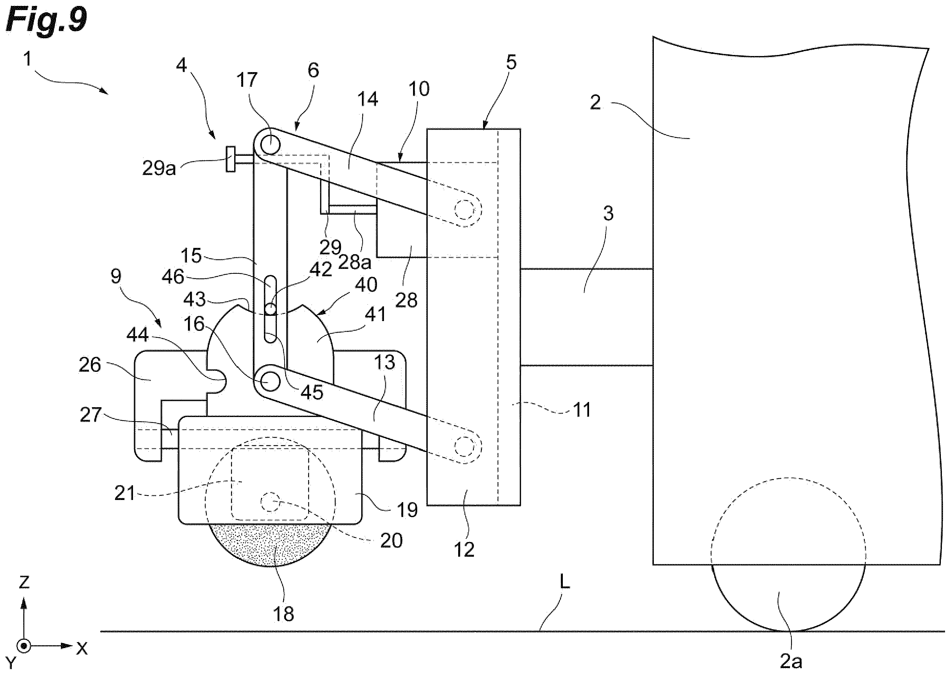

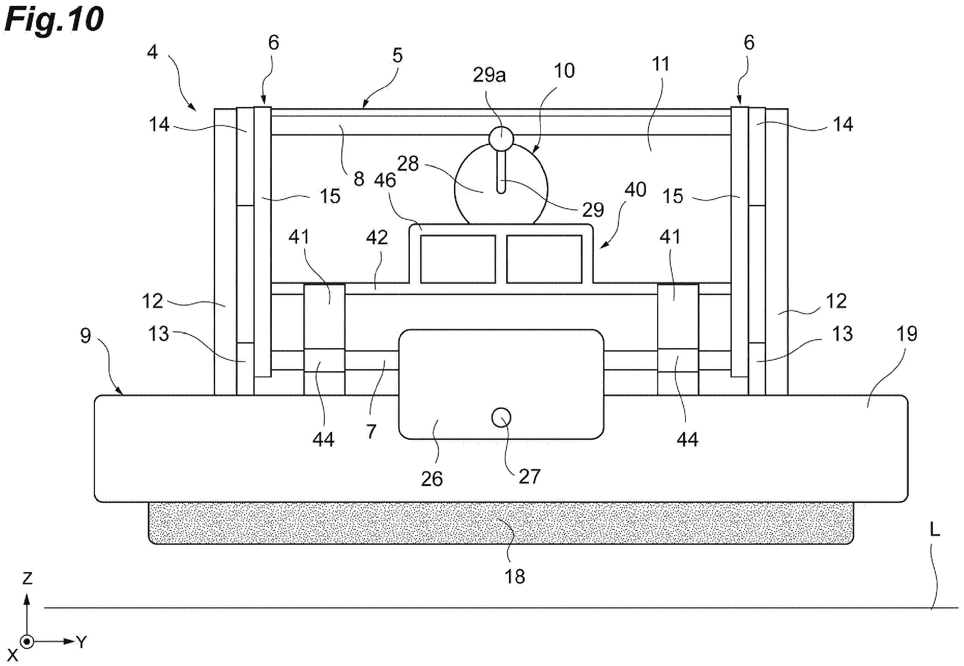

When the mode is switched from the cleaning mode to the movement mode by the mode switch 30, the controller 31 controls the brush motor 23 such that the rotating brush 18 stops rotating and controls the lifting and lowering motor 28 such that the lifting and lowering cam 29 fixed to the output shaft 28a of the lifting and lowering motor 28 pushes up the upper connecting pin 8. At this time, the controller 31 half-rotates the lifting and lowering motor 28 from the state where the rotating brush 18 is grounded to the floor surface L. Then, the upper connecting pin 8 rises by the lifting and lowering cam 29 pushing up the upper connecting pin 8 as illustrated in FIGS. 9 and 10, and thus the parallel link mechanism 6 rises. Accordingly, the brush unit 9 supported by the lower connecting pin 7 rises, and thus the rotating brush 18 is separated upward from the floor surface L.

Incidentally, feedback control may be performed on the lifting and lowering motor 28 by, for example, a cam being provided in the pivoting portion of the lower link 13 of the parallel link mechanism 6 with respect to the support member 5 and a limit switch that detects rotation of the cam being provided.

In the cleaning robot 1 described above, the floor surface L is cleaned by the cleaner 4 while the cleaning robot 1 travels when the cleaning mode is set by the mode switch 30. At this time, the trash on the floor surface L swept up by the rotating brush 18 is suctioned by a hose (not illustrated).

Here, the rotating brush 18 freely moves up and down by means of the parallel link mechanism 6 and freely swings in the forward-rearward direction and the rightward-leftward direction. Accordingly, the rotating brush 18 is reliably grounded to the floor surface L even in a case where the floor surface L has a step or an undulation.

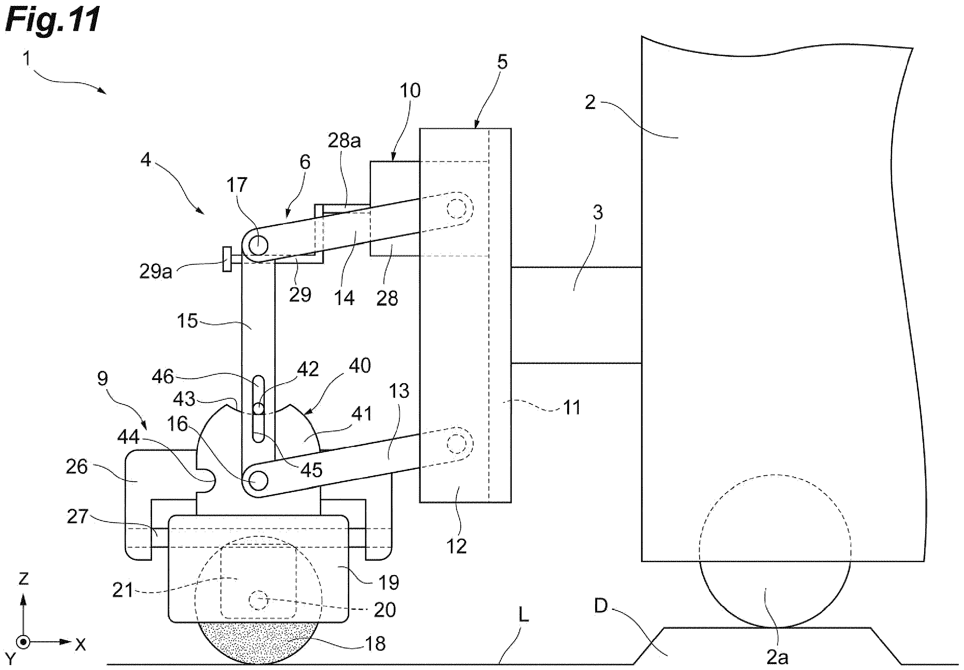

For example, in a case where the wheels 2a on both of the right and left sides of the traveling carriage 2 are on a step portion D of the floor surface L as illustrated in FIG. 11, the parallel link mechanism 6 is lowered by following the step portion D, and thus the rotating brush 18 is lowered and grounded to the floor surface L. In addition, in a case where the wheel 2a on one of the right and left sides of the traveling carriage 2 is on the step portion D of the floor surface L, the rotating brush 18 is lowered by the parallel link mechanism 6 being lowered by following the step portion D and the rotating brush 18 swings in the rightward-leftward direction by following the step portion D, and thus the rotating brush 18 as a whole is grounded to the floor surface L.

Even when the floor surface L is stepped or undulates during the traveling of the cleaning robot 1 as described above, the rotating brush 18 moves in the upward-downward direction by following the step or the undulation of the floor surface L and the rotating brush 18 swings in the forward-rearward direction and the rightward-leftward direction by following the step or the undulation of the floor surface L. As a result, the rotating brush 18 can be reliably and smoothly grounded to the stepped or undulating floor surface L. As a result, the stepped or undulating floor surface L can be stably cleaned.

On the other hand, when the movement mode is set by the mode switch 30, the parallel link mechanism 6 is raised by the lifting and lowering unit 10 and the brush unit 9 is kept raised from the floor surface L as illustrated in FIGS. 9 and 10. As a result, the cleaning robot 1 is capable of traveling without dragging the rotating brush 18. As a result, the cleaning robot 1 is capable of traveling without slowing down more than necessary and the wear of the rotating brush 18 can be suppressed.

When maintenance of the rotating brush 18 is performed, the movement mode is set by the mode switch 30. Accordingly, the brush unit 9 is kept raised from the floor surface L as illustrated in FIGS. 9 and 10. From this state, a worker flips up the rotating brush 18 such that the rotating brush 18 is directed forward as illustrated in FIGS. 12 and 13 by manually moving the flip-up mechanism 40.

Specifically, the worker first holds the handle 46 of the lock bar 42 in his or her hand and lifts the lock bar 42. Then, the lock bar 42 comes out of the notch portion 43 of the flip-up cam 41. At this time, the lock bar 42 rises along the longitudinal direction of the long hole 45 of the connection link 15.

Then, with the lock bar 42 lifted, the worker pivots the flip-up cam 41 rearward by 90 degrees and about the lower connecting pin 7 such that the notch portion 44 of the flip-up cam 41 is directed upward. As a result, the rotating brush 18 is directed straight forward. Then, the worker lowers the lock bar 42 and engages the lock bar 42 with the notch portion 44 of the flip-up cam 41. As a result, the flip-up cam 41 is restrained with respect to the forward-rearward direction by the lock bar 42, and thus the rotating brush 18 is locked in a state of being directed straight forward. Then, the worker manually removes the trash attached to the rotating brush 18.

Subsequently, when the maintenance of the rotating brush 18 is completed, the worker holds the handle 46 of the lock bar 42 in his or her hand and lifts the lock bar 42. Then, the lock bar 42 comes out of the notch portion 44 of the flip-up cam 41. Then, with the lock bar 42 lifted, the worker pivots the flip-up cam 41 forward by 90 degrees and about the lower connecting pin 7 such that the notch portion 43 of the flip-up cam 41 is directed upward. Then, the worker lowers the lock bar 42 and engages the lock bar 42 with the notch portion 43 of the flip-up cam 41. As a result, the rotating brush 18 returns to a state where the rotating brush 18 can be grounded to the floor surface L.

As described above, in the present embodiment, a worker can easily access the rotating brush 18 in performing maintenance of the rotating brush 18 by flipping up the rotating brush 18 by means of the flip-up mechanism 40 such that the rotating brush 18 faces the front of the cleaning robot 1. As a result, it is possible to easily perform the maintenance of the rotating brush 18 without removing the rotating brush 18 from the brush holder 19.

In addition, in the present embodiment, the rotating brush 18 can be flipped up so as to be directed forward by means of the simple structure of the flip-up cam 41 and the lock bar 42. In addition, the rotating brush 18 is locked in a flipped-up state by the lock bar 42 engaging with the notch portion 44 of the flip-up cam 41. Accordingly, it is possible to maintain a state where the rotating brush 18 is flipped up so as to be directed forward.

In addition, in the present embodiment, it is possible to engage the lock bar 42 with the notch portion 44 by lowering the lock bar 42 in a state where the flip-up cam 41 is pivoted with respect to the lower connecting pin 7 such that the notch portion 44 of the flip-up cam 41 is directed upward after lifting the lock bar 42 and removing the lock bar 42 from the notch portion 43 of the flip-up cam 41. Accordingly, it is possible to maintain a state where the rotating brush 18 is flipped up so as to be directed forward while simplifying the shape of the flip-up cam 41.

In addition, in the present embodiment, the brush unit 9 is supported by the support member 5 via the two parallel link mechanisms 6 and the lower connecting pin 7. Accordingly, even when the floor surface L is stepped or undulates during the traveling of the cleaning robot 1, the rotating brush 18 moves in the upward-downward direction by following the step or the undulation of the floor surface L. As a result, the rotating brush 18 can be grounded even to the stepped or undulating floor surface L. In addition, the lock bar 42 is supported by the connection link 15 so as to be movable in the upward-downward direction in a state of being engaged with the long hole 45 of the connection link 15. Accordingly, despite the structure in which the lock bar 42 is supported by the connection link 15, it is possible to easily make a change from a state where the lock bar 42 is engaged with the notch portion 43 of the flip-up cam 41 to a state where the lock bar 42 is engaged with the notch portion 44 of the flip-up cam 41.

In addition, in the present embodiment, the notch portion 43 of the flip-up cam 41 extends in the forward-rearward direction of the cleaning robot 1, and thus the lock bar 42 is movable in the forward-rearward direction relative to the flip-up cam 41 in a state where the rotating brush 18 is not flipped up. Accordingly, the rotating brush 18 is swingable in the forward-rearward direction about the lower connecting pin 7. Accordingly, even when the floor surface L is stepped or undulates, the rotating brush 18 swings in the forward-rearward direction by following the step or the undulation of the floor surface L.

Incidentally, the present disclosure is not limited to the above embodiment. For example, although the flip-up mechanism 40 flips up the rotating brush 18 such that the rotating brush 18 is directed straight forward in the above embodiment, the present disclosure is not particularly limited to that form. The rotating brush 18 may be flipped up so as to be directed diagonally upward and forward or diagonally downward and forward by the position of the notch portion 44 of the flip-up cam 41 being appropriately changed. In other words, the rotating brush 18 may or may not be more flipped up than in the state of being directed straight forward. At this time, the flip-up angle of the rotating brush 18 may be an angle at which a worker can easily access the rotating brush 18.

Although the notch portion 43 of the flip-up cam 41 extends in the forward-rearward direction such that the lock bar 42 is movable in the forward-rearward direction relative to the flip-up cam 41 in a state where the rotating brush 18 is not flipped up in the above embodiment, the present disclosure is not particularly limited to that form. Insofar as it is not necessary to swing the rotating brush 18 in the forward-rearward direction, the notch portion 43 may be U-shaped in cross section similarly to the notch portion 44 and may not extend in the forward-rearward direction.

Although the flip-up mechanism 40 has the flip-up cam 41 fixed to the brush holder 19 and pivotable with respect to the lower connecting pin 7 and the lock bar 42 for locking the flip-up cam 41 in the above embodiment, the flip-up mechanism 40 is not particularly limited to the combination of the flip-up cam 41 and the lock bar 42 insofar as the rotating brush 18 is flipped up such that the rotating brush 18 is directed forward.

Although the rotating brush 18 is flipped up by the flip-up mechanism 40 so as to be directed forward with the brush unit 9 lifted and lowered by the lifting and lowering unit 10 in the above embodiment, the present disclosure is not particularly limited to that form. The rotating brush 18 may be flipped up by the flip-up mechanism 40 so as to be directed forward in a state where the rotating brush 18 is grounded to the floor surface L.

The lifting and lowering unit 10 is optional although the lifting and lowering unit 10 lifting and lowering the brush unit 9 is provided in the above embodiment.

Although the brush unit 9 has the cylindrical rotating brush 18 in the above embodiment, the brush sweeping up trash on the floor surface L is not particularly limited to the rotating brush 18 and may be a vibrating brush, a swinging brush, or the like.

Although the cleaner 4 is attached to the traveling carriage 2 having the four omnidirectional wheels 2a in the above embodiment, the present disclosure is also applicable to, for example, cleaners attached to vehicles having general wheels.

Although the cleaner 4 is mounted in the front portion of the cleaning robot 1 in the above embodiment, the present disclosure is also applicable to a cleaner mounted in, for example, the rear portion of a cleaning robot. In a case where the cleaner is mounted in the rear portion of the cleaning robot, the brush is flipped up by the flip-up mechanism so as to be directed rearward.

A cleaner for a cleaning robot cleaning a floor surface while traveling includes a support member, a brush unit attached to the support member and having a brush grounded to the floor surface, and a flip-up mechanism flipping up the brush such that the brush is directed in a direction perpendicular to an upward-downward direction of the cleaning robot.

## Claims

1. A cleaner for a cleaning robot cleaning a floor surface while traveling, the cleaner comprising:
a support member;
a brush unit attached to the support member and having a brush grounded to the floor surface; and
a flip-up mechanism flipping up the brush such that the brush is directed in a direction perpendicular to an upward-downward direction of the cleaning robot.

2. The cleaner for a cleaning robot according to claim 1, wherein
the brush unit has a brush holder holding the brush and pivotably supported by a pin attached to the support member so as to extend in a rightward-leftward direction of the cleaning robot,
the flip-up mechanism has a cam fixed to the brush holder and pivotable with respect to the pin and a bar for locking the cam, the bar being attached to the support member so as to extend in the rightward-leftward direction, and
the cam is provided with a first notch portion engaging with the bar in a state where the brush is not flipped up and a second notch portion engaging with the bar in a state where the brush is flipped up.

3. The cleaner for a cleaning robot according to claim 2, wherein
the first notch portion is provided in a top portion of the cam, and
the second notch portion is provided in a side portion of the cam.

4. The cleaner for a cleaning robot according to claim 3, wherein
a right parallel link mechanism and a left parallel link mechanism are fixed to the support member so as to be swingable in the upward-downward direction,
the parallel link mechanism has a lower link and an upper link supported by the support member and a connection link interconnecting the lower link and the upper link and extending in the upward-downward direction,
the pin interconnects connection portions between the lower links and the connection links of the two parallel link mechanisms,
the connection link is provided with a long hole extending in the upward-downward direction, and
the bar is supported by the connection link so as to be movable in the upward-downward direction in a state where the bar is engaged with the long hole.

5. The cleaner for a cleaning robot according to claim 3 or 4, wherein the first notch portion extends in a forward-rearward direction of the cleaning robot.
